# EUROPEAN PATENT APPLICATION

(11) **EP 1 892 608 A1**
(43) Date of publication of application: **27.02.2008**
(21) Application number: 06270077.8
(22) Date of filing: 07.08.2006
(51) Int. Cl.: G06F 3/033, G06F 3/00

(54) **Gesture recognition system**

(71) Applicant: STMicroelectronics (Research & Development) Limited, Marlow, Buckinghamshire SL7 1YL (GB)
(72) Inventor: Chalmers, David, Edinburgh, Lothian EH12 5TL (GB)
(74) Representative: McBride, Peter Hill

(57) **Abstract**

A gesture recognition system comprising an input device and an image capture device connectable to a processing unit; wherein
the input device comprises a means of generating a distinctive mark on a display medium remote therefrom;
the image capture device comprises a means of detecting the distinctive mark on the display medium and determining the exact location of the distinctive mark relative to the display medium, and a means of transmitting the exact location to the processing unit; and
the processing unit comprises a means of comparing a shape formed by changes in the location of the distinctive mark with a plurality of pre-defined shapes; and a means of performing an action associated with a pre-defined shape on detecting a match between the shape formed by changes in the location of the distinctive mark and the predefined shape.

## Description

### Field of the Invention

The present invention relates to a gesture recognition system for controlling an electronic presentation system.

### Background of the Invention

Electronic presentation systems are well-known. However, in many cases, a person making a presentation is located remotely from a computer that controls the presentation. In view of this, devices to allow remote (2-20m) control of progress through a presentation have now become commonplace.

Prior art remote control devices typically use mechanical buttons to enable a user to control progress. For example, the buttons allow a user to move to a next slide or a previous slide. Alternatively, the buttons may be used to end a presentation (slide show) or the like. However, controls with many buttons are often too confusing and difficult to operate under the stressful conditions of a public presentation. Furthermore, the additional buttons required make these controls more expensive to manufacture and can often be unreliable. Equally, over-simplified controls (e.g. controls which only provide options for moving to the next slide, previous slide, or to end the presentation) are very limiting and may require a user to intervene and use normal mouse or keyboard control (e.g. to blank the screen, or to start a video clip playing) which defeats the point of having the remote control device. Finally most remote control devices have a dedicated receiver unit which must be plugged into the computer, and if lost or forgotten renders the unit inoperable.

At present, gesture recognition is used in a number of handwriting recognition schemes like Graffiti from Palm, or International Patent Application No W02006020305 by Apple Inc. relating to methods and systems for processing touch inputs (for controlling touch-screen devices). Gestural control is also used in some graphics editing applications which employ a graphics tablet, e.g. Corel Painter, Apple Motion.

### Summary of the Invention

According to the invention there is provided a gesture recognition system and method for controlling an electronic presentation system.

The present invention provides a simple interface with an electronic presentation system, which allows a user to employ familiar 'point at the screen' hand-eye coordination techniques. Furthermore, the present invention provides a more intuitive interface to the electronic presentation system insofar as it allows a user to adapt their gestures to match their mental representations of a required action.

The present invention is also cheaper to manufacture than traditional remote control devices as the present invention comprises fewer mechanical parts. Indeed in some cases no additional hardware may be required as existing laser pointing devices and built-in webcam solutions now available in many portable computers can be utilised. On a related note, the one or two buttons used can be large and comfortable to find and use. Similarly, the system of the present invention can be manufactured as a smaller unit than a traditional remote control device. For example, the system of the present invention can be built into a pen-sized unit in a similar fashion to conventional laserpointers.

Finally, the gesture recognition of the present invention is also extendable to other applications e.g. to control playback of DVDs or video clips etc.

### Brief Description of the Drawings

An embodiment of the invention will now be described with reference to the accompanying Figures in which:
Figure 1 is a block diagram of a gesture recognition system in accordance with the invention; and
Figures 2a, 2b, 2c and 2d are depictions of exemplary gestures detected and interpreted by the gesture recognition system of Figure 1.

### Detailed Description of the Preferred Embodiment

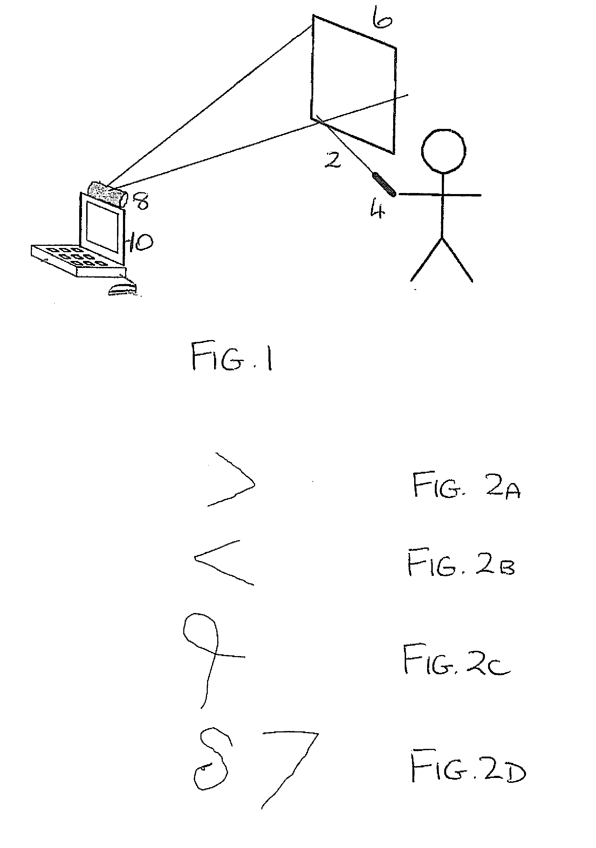

Referring to Figure 1, the present invention employs the system described in European Patent Application EP06044130.9 to modulate a beam 2 of a laser pointer 4 and to detect an X/Y location of the resulting pointer spot on a screen 6, by means of a camera 8 (focussed on the screen 8) and software detection algorithms in the camera 8 or a separate software driver on a computer 10. The modulation frequency (or modulated pulse-width) of the laser point 4 is chosen to enable the camera 8 to distinguish between the pointer spot and any other points on the screen 8 relating to a presentation. In other cases it may not be necessary to modulate the laser beam, when the software detection algorithms in computer 10 are designed to distinguish between normal use and gesture use.

In the present invention, when a laser pointer is being tracked, software checks for the presence of pre-programmed gestures that are interpreted as commands to the presentation software. The commands are passed to the presentation software as emulations of conventional keyboard commands or mouse button presses previously defined by the user. The advantage of using the laser pointer is that gestures can be extremely large (i.e. all the way up to the full size of the screen being used). This makes it much easier for the user, as the larger the gesture, the easier it is to perform successfully.

However, it is necessary to distinguish between normal laser pointer movements (e.g. when pointing to areas of the screen, or tracing along graphs or images) and gesture movements. One method would be to have a 'pointer' button and a 'gesture' button, but this runs counter to the 'one button' approach that maximises simplicity.

An alternate method of distinguishing between normal laser pointer movements and gesture movements would be to have a 'two-state' button, which could be pressed half-way down for normal laser pointer use and all the way down for gesture recognition. This is similar to the use of a two-state button on digital cameras to initiate its auto-focus. Accordingly, the 'two-state' button for distinguishing between normal laser pointer movements and gesture movements is a familiar paradigm to users. Yet another method of distinguishing between normal laser pointer movements and gesture movements would be to have a special 'command' gesture that is sufficiently obscure to ensure no accidental triggering.

Once a command gesture is made, the software would expect a gesture intended to control the presentation. Finally the gesture recognition software could take into account additional factors like velocity, scale and duration to interpret whether a movement is a gesture or a 'gesture-like' pointing movement.

The gestures themselves could consist of a default set, chosen to be cognitively associated with the commands required (i.e. most people will find them sensible and intuitive) or they could be 'learned' by the software for each individual user to suit their own mental representation. In the case of the default set, a 'training' function could allow the software to adapt the default set to accommodate to the peculiarities of the individual user, e.g. the starting point, angles of corners etc. This would be a feature of the control software.

Finally gestures could be combined to give even more subtle control and provide quite sophisticated actions without ever having to revert to use of a mouse or keyboard. For example there could be a 'go to slide number' gesture, which is followed immediately by a 'number' gesture, to jump directly to a particular slide.

Figures 2a-2d show some example gestures. In particular, Figures 2a and 2b respectively show the gesture for "go to next slide" and "go to previous slide". Similarly, Figure 2c shows the gesture for "quit" or "end show" and Figure 2d shows the gesture for "go to slide 7".

Modifications and alterations may be made to the above without departing from the scope of the invention.

## Claims

1. A gesture recognition system comprising an input device and an image capture device connectable to a processing unit; wherein
the input device (4) comprises a means of generating a distinctive mark on a display medium (6) remote therefrom;
the image capture device (8) comprises a means of detecting the distinctive mark on the display medium (6) and determining the exact location of the distinctive mark relative to the display medium (6), and a means of transmitting the exact location to the processing unit; and
the processing unit comprises a means of comparing a shape formed by changes in the location of the distinctive mark with a plurality of pre-defined shapes; and a means of performing an action associated with a pre-defined shape on detecting a match between the shape formed by changes in the location of the distinctive mark and the predefined shape.

2. The gesture recognition system as claimed in Claim 1 wherein the input device (4) comprises a switchable means of indicating to the processing unit not to compare the shape formed by the changes in the location of the distinctive mark with the pre-defined shapes.

3. The gesture recognition system as claimed in Claim 1 or Claim 2 wherein the plurality of pre-defined shapes is adaptable in accordance with the gestures of a user.

4. The gesture recognition system as claimed in any of the preceding claims wherein the distinctive mark generated by the input device (4) is an electromagnetic signal and the means of detecting the distinctive mark is an electromagnetic detector.

5. The gesture recognition system as claimed in any of the preceding claims wherein the distinctive mark generated by the input device (4) is a laser signal and the means of detecting the distinctive mark is a laser detector.

6. The gesture recognition system as claimed in any of the preceding claims wherein the image capture device (8) is a video camera.

7. A control system for an electronic presentation system comprising the gesture recognition system as claimed in any of the preceding claims.

8. A DVD control system comprising the gesture recognition system as claimed in any of the preceding claims.

9. A method of recognizing a gesture comprising the steps of:
generating a distinctive mark on a remote display medium;
detecting the distinctive mark on the display medium;
determining the exact location of the distinctive mark relative to the display medium;
detecting changes in the location of the distinctive mark;
comparing a shape formed by the changes in the location of the distinctive mark with a plurality of pre-defined shapes;
performing an action associated with a pre-defined shape when a match is found between the shape formed by the changes in the location of the distinctive mark and the pre-defined shape.

10. A method of recognizing a gesture as claimed in Claim 9, wherein the method comprises the additional step of receiving and acting on a command not to compare the shape formed by changes in the location of the distinctive mark with a plurality of pre-defined shapes.
